# EUROPÄISCHE PATENTANMELDUNG

(11) **EP 4 300 793 A1**
(43) Veröffentlichungstag der Anmeldung: **03.01.2024**
(21) Anmeldenummer: 23177975.2
(22) Anmeldetag: 07.06.2023
(51) Int. Cl.: H02K 11/33, H02M 7/42, B60L 15/20, H02K 17/12

(54) **ELEKTRISCHES ANTRIEBSSYSTEM FÜR EIN SCHIENENFAHRZEUG**

(30) Priorität: 30.06.2022 DE 102022206683
(71) Anmelder: Siemens Mobility GmbH, 81739 München (DE)
(72) Erfinder: Adam, Christoph, 90411 Nürnberg (DE); Eberler, Josef, 92318 Neumarkt/Opf. (DE)
(74) Vertreter: Siemens Patent Attorneys

(57) **Zusammenfassung**

Die vorliegende Erfindung betrifft ein elektrisches Antriebssystem (10) für ein Fahrzeug, insbesondere für ein Schienenfahrzeug, aufweisend wenigstens eine elektrische Maschine (30), die eine Asynchronmaschine umfasst, wobei die elektrische Maschine (30) von einem Umrichter (32) versorgt wird, und durch die zumindest ein Antriebsrad des Fahrzeugs antreibbar ist, dadurch gekennzeichnet, dass die elektrische Maschine (30) eine Polpaarzahl von wenigstens 3 aufweist, und dass die elektrische Maschine (30) von einem Umrichter versorgt wird, der eine Taktfrequenz in einem Bereich von größer oder gleich 2000 Hz ermöglicht.

## Beschreibung

Die vorliegende Erfindung betrifft ein elektrisches Antriebssystem. Die vorliegende Erfindung betrifft insbesondere ein elektrisches Antriebssystem, welches auf vorteilhafte Weise unterschiedliche Vorteile, wie insbesondere geringer Bauraum, geringes Gewicht und geringer Kosteneinsatz, mit einander verbinden kann.

Elektrische Maschinen sind als Generatoren und/oder elektrische Motoren weit bekannt. Die Vorteile von Permanentmagnet-Synchronmotoren (PSM) liegen dabei in den vergleichsweise geringen Rotorverlusten und damit besseren Wirkungsgraden im Vergleich etwa zur Asynchronmaschine. Darüber hinaus sind Asynchronmotoren und Reluktanzmotoren bekannt, welche insbesondere im Teillastbetrieb oder bei lastlosen Rollphasen geringe Verluste zeigen.

Antriebsmotoren insbesondere für Schienenfahrzeuge sind auf verschiedene Eigenschaften zu optimieren, die teilweise im Konflikt miteinander stehen. Genannt werden sollten hier etwa geringe Herstellungskosten, niedriger Energieverbrauch, kleine Baugrößen, geringes Gewicht und geringe Geräuschemissionen.

Die aus dem Stand der Technik bekannten Lösungen können somit noch weiteres Verbesserungspotential bieten.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche insbesondere eine Kombination verschiedener Anforderungen an elektrische Maschinen insbesondere für Schienenfahrzeuge möglich wird.

Die Lösung der Aufgabe erfolgt erfindungsgemäß zumindest zum Teil durch ein elektrisches Antriebssystem mit den Merkmalen des Anspruchs 1. Die Lösung der Aufgabe erfolgt erfindungsgemäß ferner zumindest zum Teil durch einen Antriebsstrang mit den Merkmalen des Anspruchs 8 sowie durch ein Fahrzeug mit den Merkmalen des Anspruchs 9. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein elektrisches Antriebssystem für ein Fahrzeug, insbesondere für ein Schienenfahrzeug, aufweisend wenigstens eine elektrische Maschine, die eine Asynchronmaschine umfasst, wobei die elektrische Maschine von einem Umrichter versorgt wird, und durch die zumindest ein Antriebsrad des Fahrzeugs antreibbar ist, wobei die elektrische Maschine eine Polpaarzahl von wenigstens 3 aufweist, und wobei die elektrische Maschine von einem Umrichter versorgt wird, der eine Taktfrequenz in einem Bereich von größer oder gleich 2000 Hz, beispielsweise größer oder gleich 2500 Hz, etwa größer oder gleich 4000 Hz ermöglicht.

Eine derartige Ausgestaltung erlaubt auf besonders vorteilhafte Weise eine Möglichkeit, durch welche auf vorteilhafte Weise unterschiedliche Vorteile, wie insbesondere geringer Bauraum, geringes Gewicht und geringer Kosteneinsatz gemeinsam ermöglicht werden können.

Erfindungsgemäß vorgeschlagen wird somit ein elektrisches Antriebssystem für ein Fahrzeug, wie etwa für ein Schienenfahrzeug, welches auch als Bahnfahrzeug bezeichnet werden kann. Als wenigstens eine elektrische Maschine umfasst das elektrische Antriebssystem eine Asynchronmaschine. Diese zeichnet sich etwa dadurch aus, dass sie einen einfachen und robusten Aufbau, eine große Betriebssicherheit und einen geringen Aufwand für Wartung und Pflege zeigt.

Dabei ist es vorgesehen, dass die elektrische Maschine und damit genauer die Asynchronmaschine eine Polpaarzahl von wenigstens 3 aufweist. In anderen Worten ist es vorgesehen, dass die Asynchronmaschine wenigstens 6-polig, beispielsweise 6- oder 8 polig ausgestaltet ist. Es kann jedoch bevorzugt sein, dass die Asynchronmaschine 6-polig ist.

Darüber hinaus ist es bekannt, dass eine elektrische Maschine wie hier im Detail die Asynchronmaschine, von einem auch als Pulswechselrichter benannten Umrichter versorgt wird. Dabei ist es möglich und in vielen Fällen bevorzugt, dass ein Umrichter auch mehrere elektrische Maschinen versorgen kann. Beispielsweise kann ein Umrichter zwei oder vier Asynchronmaschinen versorgen. Erfindungsgemäß ist es vorgesehen, dass der Umrichter eine Taktfrequenz in einem Bereich von größer oder gleich 2000 Hz ermöglicht. Dies ist beispielsweise möglich durch seine Bauform, insbesondere durch die Auswahl seines Halbleiters.

In anderen Worten wird es somit gemäß der vorliegenden Erfindung vorgeschlagen, dass als insbesondere hochdrehende elektrische Maschine ein 6 oder höherpoliger Asynchronmotor eingesetzt wird, der von einem Umrichter mit hoher Taktfrequenz gespeist wird.

Dadurch ergeben sich gegenüber den Lösungen aus dem Stand der Technik signifikante Vorteile.

Dadurch, dass bei der elektrischen Maschine oder genauer dem Asynchronmotor eine hohe Polzahl, nämlich insbesondere 6 oder 8 statt 4 wie im Stand der Technik üblich, vorgesehen ist, kann der magnetische Rückschluss im Ständer oder genauer im Ständerjoch schmäler ausgeführt werden. Dies wiederum kann erlauben, dass bei gleichen Außenabmessungen die Ständerbohrung vergrößert werden oder die Ständernuthöhe erhöht werden kann. Dies reduziert die Verluste im Motor beziehungsweise in der elektrischen Maschine. Somit kann eine verbesserte Effizienz ermöglicht werden. Ferner kann dem Problem der Entwärmung begegnet werden. Denn durch das schmälere Ständerjoch ist der Wärmepfad von der heißen Ständerwicklung in die Kühlkanäle, die üblicherweise außerhalb des Ständerblechpakets angeordnet sind, verkürzt. Dadurch wird wiederum die Entwärmung des Motors verbessert.

Die hohe Polzahl der Asynchronmaschine reduziert ferner die axiale Ausladung der Ständerwicklung. Dadurch kann zum einen die axiale Aktivteillänge erhöht werden. Dies bewirkt niedrige Verluste und wiederum verbesserte Entwärmung. Weiterhin werden durch die kleine Wickelkopfausladung Heißpunkte in der Ständerwicklung reduziert, was wiederum Probleme der Entwärmung reduziert.

Hinsichtlich des Umrichters erlaubt seine hohe Taktfrequenz weiterhin signifikante Vorteile. So kann auch bei hohen Grundfrequenzen eine hohe Pulszahl realisiert werden. Dadurch kann auch bei hohen Drehzahlen die Motorspannung noch oberschwingungsarm gestellt werden und der Motor mit einer verlustoptimalen Spannung versorgt werden. Auch dies kann sich vorteilhaft auf die Entwärmung auswirken.

Im Anfahrbereich des Schienenfahrzeugs können ferner umrichterbedingte Geräusche leichter vermieden werden. Damit wird der Nachteil, dass 6-polige Motoren im Vergleich zu 4-poligen aufgrund des dünneren Ständerjochs anfälliger für Geräuschschwingungen sind, kompensiert.

Hinsichtlich des Umrichters kann es bevorzugt sein, dass dieser ausgewählt ist aus einem Siliziumcarbit-Umrichter, einem Galiumnitrid-Umrichter und einem Diamant-Umrichter. In anderen Worten kann der Umrichter bevorzugt ein Halbleitermaterial aufweisen, das ausgewählt ist aus Siliziumcarbit, Galiumnitrid oder Diamant. Besonders bevorzugt kann der Umrichter ein Siliziumcarbid-Umrichter sein. Es hat sich gezeigt, dass insbesondere die vorgenannten Umrichter durch eine hohe mögliche Taktfrequenz die vorbeschriebenen Vorteile erlauben. Ein weiterer Vorteil der genannten Umrichtertypen ist, dass die Verluste in den Leistungshalbleitern geringer sind als etwa bei Silizium-Umrichtern. Dadurch wir der Wirkungsgrad des Antriebssystems weiter gesteigert.

Weiter bevorzugt kann die elektrische Maschine flüssigkeitsgekühlt sein wassergekühlt sein. Unter einer Flüssigkeitskühlung ist dabei zu verstehen, dass entsprechende Kühlmittelkanäle für Kühlflüssigkeit vorgesehen sein, welche die elektrische Maschine kühlen können. Als Kühlmittel beziehungsweise als Kühlflüssigkeit kann dabei etwas Wasser oder bevorzugt eine Mischung aus Wasser und Frostschutzmittel, etwa in einem Mischverhältnis von ca. 50:50, verwendet werden, wobei jedoch auch andere Flüssigkeiten wären möglich.

Durch eine Flüssigkeitskühlung wird es möglich, auch bei hohen Drehzahlen keine übermäßigen Verluste durch einen Lüfter hinnehmen zu müssen. Darüber hinaus kann das elektrische Antriebssystem so verglichen mit einer lüfterbasierten Lösung deutlich geräuschärmer arbeiten. Darüber hinaus kann zumindest in bestimmten Betriebsphasen die Abwärme der Kühlflüssigkeit zum Heizen des Fahrzeugs verwendet werden.

Grundsätzlich ist die Verwendung einer Wasserkühlung oftmals auch mit Nachteilen behaftet, die erfindungsgemäß allerdings zumindest zum Teil überwunden oder zumindest abgeschwächt werden können, so dass eine Wasserkühlung besonders vorteilhaft ist.

Insbesondere erlaubt die Verwendung einer hochpoligen elektrischen Maschine, insbesondere im Vergleich zu niederpoligen Motoren, etwa zu 4-poligen Motoren, bei gleicher Gesamtbaugröße niedrigere Läuferverluste. Dadurch kann die vergleichsweise ineffiziente Entwärmung des Läufers bei wassergekühlten Motoren teilweise kompensiert beziehungsweise egalisiert werden kann.

Darüber hinaus entstehen insbesondere im Läufer weniger Verluste als bei geringer Taktfrequenz. Dies ist insbesondere in dieser Ausgestaltung von Vorteil, da der Läufer bei wassergekühlten Motoren vergleichsweise weniger effizient gekühlt wird.

Es kann weiterhin von Vorteil sein, dass ein Dynamoblech der elektrischen Maschine spezifischen Verluste von weniger 4,70 W/kg bei 50 Hz und 1,5 T zeigt. Beispiele für derartige Bleche sind beispielsweise die mit der Normbezeichnung M270-35A, M270-50A, M330-50A nach DIN EN 10106 benannten Bleche. Durch Einsatz von derartig verlustarmen Dynamoblechen können auch bei hohen Drehzahlen die Ummagnetisierungsverluste im Ständer geringgehalten werden. Dieser Vorteil ist aufgrund der Verwendung von verlustärmeren Blechen als bei Standard-Asynchronmotoren möglich, wodurch eben die Reduzierung der Eisenverluste möglich ist.

Unter einem Dynamoblech ist bei einer Asynchronmaschine in für den Fachmann bekannter Weise das beispielsweise genutete Blech zu verstehen, aus welchem der Ständer aufgebaut ist. Beispielsweise besteht der Ständer aus genutetem Dynamoblech, das nach dem Schichten als ganzes Blechpaket zusammengepresst und durch geeignete Maßnahmen unter einer gewissen Vorspannung gehalten wird. In die Nuten dieses Paketes werden die Leiter der Ständerwicklung eingelegt.

Erfindungsgemäß kann somit ein kleiner, leichter und kostengünstiger Motor gebaut werden, was sich wiederum positiv auf die Energieeffizienz auswirkt. Die bisherigen Einschränkungen zum Einsatz von 6 bzw. 8-poligen hochdrehenden Motoren, werden durch die hohe Taktfrequenz aufgehoben. Dadurch ergeben sich synergistische Effekte durch eine Kombination von hochpoligem Asynchronmotor mit Umrichter mit hoher Taktfrequenz, welche durch den Stand der Technik nicht möglich waren.

Hinsichtlich weiterer Vorteile und technischer Merkmale des elektrischen Antriebssystems wird hiermit auf die Beschreibung des Antriebsstrangs, des Fahrzeugs, die Figuren und die Beschreibung der Figuren verwiesen.

Beschrieben wird ferner ein Antriebsstrang für ein Fahrzeug, insbesondere für ein Schienenfahrzeug, wobei der Antriebsstrang ein elektrisches Antriebssystem zum Antreiben zumindest eines Rades umfasst, wobei das Antriebssystem ausgestaltet ist, wie vorstehend beschrieben.

Beispielsweise kann der Antriebsstrang in einem Bahnfahrzeug beziehungsweise Schienenfahrzeug angeordnet sein beziehungsweise Teil des Bahnfahrzeugs sein, so dass eine gute Implementierung in bereits bestehend Systeme sowie eine breite Anwendbarkeit gegeben ist. In diesem Fall kann der Antriebsstrang das vorbeschrieben Antriebssystem, ein mit den Motoren verbundenes Getriebe, eine Radsatzwelle und eine Achskupplung zum Übertragen des Antriebsmomentes vom Getriebe auf die Radsatzwelle umfassen.

Die spezifischen Vorteile eines derartigen Antriebsstrangs können insbesondere darin gesehen werden, dass ein kleiner, leichter und kostengünstiger Motor ermöglicht werden kann, was sich wiederum positiv auf die Energieeffizienz auswirkt.

Hinsichtlich weiterer Vorteile und technischer Merkmale des Antriebsstrangs wird hiermit auf die Beschreibung des elektrischen Antriebssystems, des Fahrzeugs, die Figuren und die Beschreibung der Figuren verwiesen.

Beschrieben wird ferner ein Fahrzeug, wobei das Fahrzeug wenigstens eines von einem elektrischen Antriebssystem und einem Antriebsstrang aufweist, wie diese vorstehend beschrieben sind.

Beispielsweise kann das Fahrzeug ein auch Bahnfahrzeug genanntes Schienenfahrzeug sein, da insbesondere für derartige Fahrzeuge entsprechende Antriebsstränge beziehungsweise elektrische Antriebssysteme geeignet sind.

Die vorstehend beschriebenen Vorteile sind auch für ein beschriebenes Fahrzeug einschlägig, so dass ein kleiner, leichter und kostengünstiger Motor ermöglicht werden kann, was sich wiederum positiv auf die Energieeffizienz auswirkt.

Hinsichtlich weiterer Vorteile und technischer Merkmale des Fahrzeugs wird hiermit auf die Beschreibung des elektrischen Antriebssystems, des Antriebsstrangs, die Figuren und die Beschreibung der Figur verwiesen.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
- Fig. 1: eine schematische Ansicht eines elektrischen Antriebssystems gemäß der vorliegenden Erfindung;
- Fig. 2: eine Schnittansicht einer elektrischen Maschine gemäß einer 4-poligen Ausgestaltung gemäß dem Stand der Technik von der Seite;
- Fig. 3: eine Schnittansicht einer elektrischen Maschine gemäß einer 6-poligen Ausgestaltung der vorliegenden Erfindung von der Seite; und
- Fig. 4: einen Antriebsstrang gemäß einer Ausgestaltung der vorliegenden Erfindung.

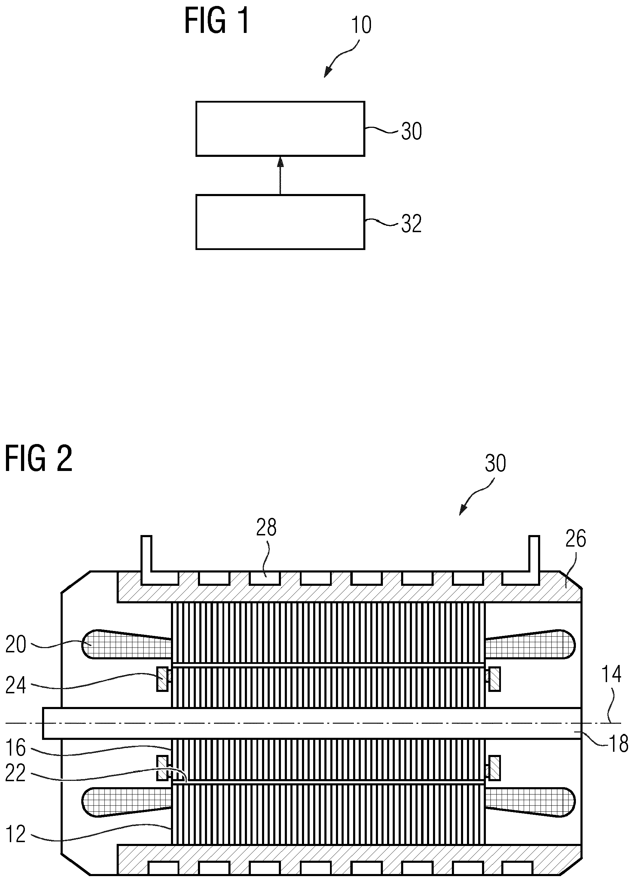

In der Figur 1 ist ein elektrisches Antriebssystem 10 für ein Schienenfahrzeug gezeigt. Das elektrische Antriebssystem 10 umfasst wenigstens eine elektrische Maschine 30, die eine Asynchronmaschine umfasst. Ferner ist gezeigt, dass die elektrische Maschine 30 von einem Umrichter 32 versorgt wird. Die elektrische Maschine 30 weist eine Polpaarzahl von wenigstens 3 auf uns wird nachfolgend in größerem Detail beschrieben. Der Umrichter 32 ermöglicht ferner eine Taktfrequenz in einem Bereich von größer oder gleich 2000 Hz.

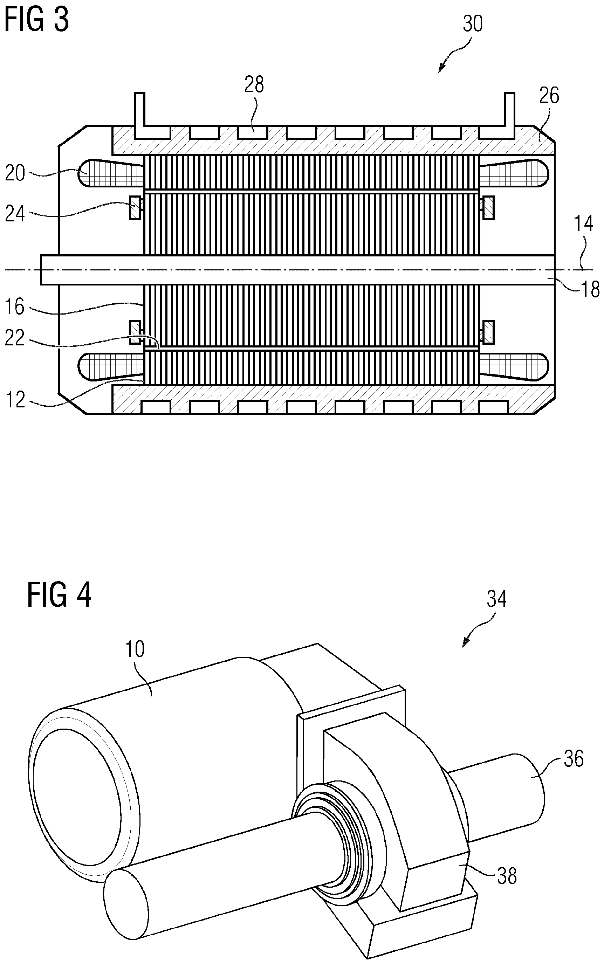

In der Figur 2 ist eine Ausgestaltung einer elektrischen Maschine 30 für das elektrische Antriebssystem 10 aus Figur 1 gezeigt. Die elektrische Maschine 30 kann insbesondere als Motor Teil eines Antriebsstrangs 34 eines Fahrzeugs, wie insbesondere eines Schienenfahrzeugs sein, wie dies mit Bezug auf Figur 4 in größerem Detail gezeigt ist.

Die elektrische Maschine 30 umfasst einen Stator 12, der als Ständerblechpaket aus einem Dynamoblech ausgestaltet sein kann, und einen um eine Rotorachse 14 rotierbaren Rotor 16, der als Läufterblechpaket ausgestaltet sein kann. Die Rotorachse 14 kann durch eine Welle 18 verlaufen, an welcher der Rotor 16 befestigt, beispielswiese aufgeschrumpft, ist.

Der Rotor 16 umfasst ferner einen Kurzschlusskäfig aus Kupfer oder Aluminium zum Führen der Rotorströme, sowie eine Erregerspule, die etwa als Kupferspule ausgestaltet sein kann, und von welcher die Ständerwicklung beziehungsweise der Wickelkopf 20 gezeigt ist. Die Erregerspule ist Teil des Stators 12, der von dem Rotor 16 durch einen Luftspalt 22 getrennt ist.

Figur 2 zeigt ferner, dass der Rotor 16 mit einem Kurzschlussring 24 versehen ist.

Die elektrische Maschine 30 gemäß Figur 2 ist ferner durch ein Gehäuse 26 gegenüber der Umgebung der elektrischen Maschine 30 gekapselt. Zur Kühlung sind Kühlkanäle 28 vorgesehen, welche eine Flüssigkeitskühlung ausbilden.

Die Figur 2 zeigt dabei eine Ausgestaltung einer 4-poligen Asynchronmaschine.

In der Figur 3 ist eine entsprechende Ausgestaltung der elektrischen Maschine 30 gezeigt, welche als 6-polige Asynchronmaschine gebildet ist, wobei die beschriebenen Vorteile entsprechend auch für eine 8-polige Asynchronmaschine gelten. Ferner wird hinsichtlich gleicher oder vergleichbarer Bauteile und deren Bezugszeichen auf die Beschreibung der Figur 2 verwiesen.

Insbesondere im Vergleich der Figuren 2 und 3 wird ersichtlich, dass die hohe Polzahl der Asynchronmaschine gemäß Figur 3 und damit gemäß der vorliegenden Erfindung die axiale Ausladung der Ständerwicklung beziehungsweise des Wickelkopfes 20 reduzieren kann. Dadurch kann zum einen die axiale Aktivteillänge erhöht werden. Dies bewirkt niedrige Verluste und wiederum verbesserte Entwärmung. Weiterhin werden durch die kleine Wickelkopfausladung Heißpunkte in der Ständerwicklung reduziert, was wiederum Probleme der Entwärmung reduziert.

Darüber hinaus ist in der Figur 3 zu erkennen, dass der magnetische Rückschluss im Ständer oder genauer im Ständerjoch schmäler ausgeführt werden kann. Dies wiederum kann erlauben, dass bei gleichen Außenabmessungen die Ständerbohrung vergrößert werden oder die Ständernuthöhe erhöht werden kann. Dies reduziert die Verluste im Motor beziehungsweise in der elektrischen Maschine 30.

Figur 4 zeigt einen beispielhaften Antriebsstrang 34 für ein Fahrzeug, insbesondere für ein Schienenfahrzeug, das eine zuvor beschriebene elektrische Maschine 30 mit einem Umrichter 32, gemeinsam gezeigt als elektrisches Antriebssystem 10, aufweist. Das Antriebssystem 10 ist mit einem Getriebe 38 verbunden. Durch das Getriebe 38 verläuft eine Radsatzwelle 36, die insbesondere über eine Kupplung mit dem Getriebe 38 wechselwirkt und durch welche Räder des Fahrzeugs antreibbar sind. Entsprechend kann durch die elektrische Maschine 30 eine Radsatzwelle 36, welche der Welle 18 der Figuren 2 und 3 entsprechen kann, und damit ein Rad des Schienenfahrzeugs antreibbar sein.

## Patentansprüche

1. Elektrisches Antriebssystem (10) für ein Fahrzeug, insbesondere für ein Schienenfahrzeug, aufweisend wenigstens eine elektrische Maschine (30), die eine Asynchronmaschine umfasst, wobei die elektrische Maschine (30) von einem Umrichter (32) versorgt wird, und durch die zumindest ein Antriebsrad des Fahrzeugs antreibbar ist, **dadurch gekennzeichnet, dass** die elektrische Maschine (30) eine Polpaarzahl von wenigstens 3 aufweist, und dass die elektrische Maschine (30) von einem Umrichter (32) versorgt wird, der eine Taktfrequenz in einem Bereich von größer oder gleich 2000 Hz ermöglicht.

2. Elektrisches Antriebssystem (10) nach Anspruch 1,
**dadurch gekennzeichnet, dass** die elektrische Maschine (30) von einem Umrichter (32) versorgt wird, der eine Taktfrequenz in einem Bereich von größer oder gleich 4000 Hz ermöglicht.

3. Elektrisches Antriebssystem (10) nach Anspruch 1 oder 2, **dadurch gekennzeichnet, dass** der Umrichter (32) ausgewählt ist aus der Gruppe bestehend aus einem Siliziumcarbid-Umrichter, einem Galiumnitrid-Umrichter und einem Diamant-Umrichter.

4. Elektrisches Antriebssystem (10) nach Anspruch 3,
**dadurch gekennzeichnet, dass** der Umrichter (32) einen Siliziumcarbid-Umrichter umfasst.

5. Elektrisches Antriebssystem (10) nach einem der Ansprüche 1 bis 4, **dadurch gekennzeichnet, dass** die elektrische Maschine (30) eine Polpaarzahl von drei oder vier aufweist.

6. Elektrisches Antriebssystem (10) nach einem der Ansprüche 1 bis 5, **dadurch gekennzeichnet, dass** die elektrische Maschine (30) flüssigkeitsgekühlt ist.

7. Elektrisches Antriebssystem (10) nach einem der Ansprüche 1 bis 6, **dadurch gekennzeichnet, dass** ein Dynamoblech der elektrischen Maschine (30) spezifische Verluste von weniger als 4,70 W/kg bei 50 Hz und 1,5 T zeigt.

8. Antriebsstrang (34) für ein Fahrzeug, insbesondere für ein Schienenfahrzeug, wobei der Antriebsstrang (34) ein elektrisches Antriebssystem (10) zum Antreiben zumindest eines Rades umfasst, **dadurch gekennzeichnet, dass** das Antriebssystem (10) ausgestaltet ist nach einem der Ansprüche 1 bis 7.

9. Fahrzeug, **dadurch gekennzeichnet, dass** das Fahrzeug wenigstens eines von einem elektrischen Antriebssystem (10) nach einem der Ansprüche 1 bis 7 und einem Antriebsstrang (34) nach Anspruch 8 aufweist.

10. Fahrzeug nach Anspruch 9, **dadurch gekennzeichnet, dass**
das Fahrzeug ein Schienenfahrzeug ist.
